Europäisches Patentamt

European Patent Office

Office européen des brevets

(11) Veröffentlichungsnummer: **0 011 807**
**B1**

(12) **EUROPÄISCHE PATENTSCHRIFT**

(45) Veröffentlichungstag der Patentschrift:
09.02.83

(21) Anmeldenummer: 79104601.4

(22) Anmeldetag: 19.11.79

(51) Int. Cl.³: **H 02 P 9/10,** H 02 J 3/24,
H 03 H 11/16, G 05 B 5/01

(54) Schaltungsanordnung zur Bedämpfung von Leistungspendelungen in Netzen.

(30) Priorität: 30.11.78 DE 2851871

(43) Veröffentlichungstag der Anmeldung:
11.06.80 Patentblatt 80/12

(45) Bekanntmachung des Hinweises auf die Patenterteilung:
09.02.83 Patentblatt 83/6

(84) Benannte Vertragsstaaten:
BE CH FR GB NL SE

(56) Entgegenhaltungen:
CH-A-461 609
DE-C-2 414 807
US-A-2 984 799
US-A-3 477 014
»Siemens Forschungs- und Entwicklungs-Berichte«, Bd. 6 (1977), Nr. 1, S. 29—38

(73) Patentinhaber: SIEMENS AKTIENGESELLSCHAFT,
Berlin und München Wittelsbacherplatz 2,
D-8000 München 2 (DE)

(72) Erfinder: Ott, Günther, Dipl.-Ing.,
Friedrich-Bauer-Strasse 1, D-8520 Erlangen (DE)
Erfinder: Kaufhold, Wolfgang, Dipl.-Ing., Lannersberg 15,
D-8520 Erlangen (DE)

## Schaltungsanordnung zur Bedämpfung von Leistungspendelungen in Netzen

Die Erfindung betrifft eine Schaltungsanordnung nach dem Oberbegriff des Patentanspruches.

Zur Bedämpfung von Leistungspendelungen der genannten Art durch Einwirkung auf die Erregung hat man bisher Schaltungen vorgesehen, die so bemessen sind, daß sie für einen bestimmten begrenzten Frequenzbereich ein von Änderungen der Leistung des Netzes abgeleitetes Dämpfungssignal bilden, das auf die Erregeranordnung mindestens einer an das Netz angeschlossenen Synchronmaschine wirkt, indem es den Spannungsregler im Sinne einer Beseitigung der Auswirkungen der Leistungsänderung beeinflußt (US-A-3 477 014). Bei Verwendung von Filtern hat das Dämpfungssignal in dem gewählten Bereich nur für eine Pendelfrequenz eine optimale Phasenlage. Für einen betriebsmäßig geforderten Bereich von Pendelfrequenzen mit im ganzen Bereich optimaler Phasenlage werden daher eine Vielzahl unterschiedlich ausgelegter Filter erforderlich, was einen unzumutbaren Aufwand bedeuten würde und zu einer gegenseitigen unerwünschten Beeinflussung führen könnte.

Der Erfindung liegt die Aufgabe zugrunde, eine einfache und störungsfrei arbeitende Schaltungsanordnung nach dem Oberbegriff des Patentanspruchs zu schaffen, mit der Dämpfungssignale erhalten werden, die in einem Pendelfrequenzbereich für jede mögliche Pendelfrequenz eine optimale Phasenlage bildet.

Die Lösung der gestellten Aufgabe gelingt gemäß der Erfindung durch die Maßnahmen nach dem Kennzeichen des Patentanspruches.

Ein Ausführungsbeispiel der Erfindung ist anhand eines vereinfachten Blockschaltbildes nachfolgend erläutert.

Die auf ihre Leistungsänderung überwachte Wirk-Istleistung $P_{ist}$ eines Generators wird gleichzeitig dem jeweiligen Eingang E1, E2 zweier in an sich bekannter Weise aus Operationsverstärkern und Summiergliedern gebildeten Vektoridentifizierern Vi1 und Vi2 zugeführt (DE-C3-2 414 807; »Siemens Forschungs- und Entwicklungs-Berichte« Bd. 6 (1977) Nr. 1, S. 29—38). Jeder Vektoridentifizierer hat zwei Ausgänge A11 (direkter Ausgang), A12 (phasenverschobener Ausgang) bzw. A21 (direkt), A22 (phasenverschoben). Der eine Vektoridentifizierer Vi1 ist annähernd auf die maximale (z. B. 1 bis 1,2 Hz), der andere Vektoridentifizierer Vi2 annähernd auf die minimale (z. B. 0,2 bis 0,4 Hz) Pendelfrequenz ausgelegt. Die den jeweiligen Anteil der Wirkleistungsänderung erfassenden Ausgänge A11 und A21 sind über Anpassungsglieder (Operationsverstärker) O11 bzw. O21 mit Summiergliedern S1 bzw. S2 verbunden, an die außerdem die den jeweiligen 90° phasenverschobenen Anteil der Leistungsänderung wiedergebenden Ausgänge des jeweils anderen Vektoridentifizierers über Anpassungsglieder

O12 bzw. O22 angeschlossen sind.

Die Ausgänge der beiden Summierglieder S1, S2 sind über Anpassungsglieder O3 bzw. O4 an ein Endsummierglied S3 geschaltet, an dem das Gesamtsignal abgenommen wird, das dann auf die Erregeranordnung einer nicht dargestellten Synchronmaschine wirkt.

Die Anpassungsglieder O11, O12, O21 und O22 legen die Frequenzabhängigkeit des Gesamtsignals im gesamten Frequenzbereich zwischen minimaler und maximaler Pendelfrequenz fest, wobei das Gesamtsignal aus der Summe der an beiden Summiergliedern S1 bzw. S2 abgenommenen Komponentensummen besteht. Die Phasenlage des Gesamtsignals ändert sich im erwähnten Bereich in mathematisch positivem Sinn mit zunehmender Pendelfrequenz, wogegen sich die Phasenlage außerhalb des Pendelbereiches negativ mit zunehmender Frequenz ändert.

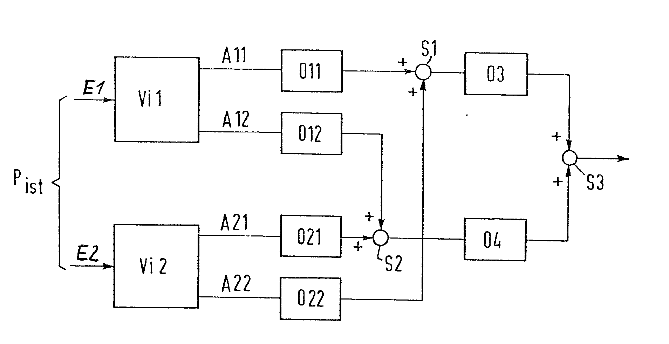

### Patentanspruch

Schaltungsanordnung zur Bedämpfung von Leistungspendelungen in Netzen durch von Leistungsänderungen abgeleiteten Signalen, die auf die Erregeranordnung mindestens einer Synchronmaschine geführt sind, dadurch gekennzeichnet, daß die veränderliche Wirk-Istleistung ($P_{ist}$) gleichzeitig den Eingängen zweier für unterschiedliche Pendelfrequenzen optimierter Vektoridentifizierer (Vi1, Vi2) zugeführt ist, deren jeweils direkte Ausgänge (A11, A21) über je ein Anpassungsglied (O11, O21) auf je ein Summierglied (S1, S2) und deren jeweils phasenverschobene Ausgänge (A12, A22) über je ein Anpassungsglied (O12, O22) auf das jeweils mit dem direkten Ausgang des anderen Vektoridentifizierers verbundene Summierglied geschaltet sind, daß ferner die Ausgänge der beiden Summierglieder (S1, S2) über je ein Anpassungsglied (O3, O4) auf ein Endsummierglied (S3) geführt sind, an dessen Ausgang ein auf die Erregeranordnung der Synchronmaschine geführtes, die Leistungspendelungen dämpfendes Gesamtsignal abnehmbar ist, dessen Phasenlage in einem wählbaren Frequenzbereich sich mit steigender Pendelfrequenz im mathematisch positiven Sinn ändert.

### Claim

Circuit arrangement for damping power oscillations in power systems by means of signals which are derived from power modifications and are brought to the energising arrangement of at least one synchronous machine, CHARACTERISED IN THAT the variable effective — actual output ($P_{ist}$) is simultaneously supplied to the inputs of two vector

identifiers (Vi1, Vi2), which are optimized for different oscillation frequencies and the direct outputs (A11, A21) of which, as they may be, are switched in each case by way of an adaption member (O11, O21) in each case to a summing member (S1, S2) and the outputs (A12, A22) of which, being phase-displaced in each case, are switched in each case by way of an adaption member (O12, O22) to the summing member, connected in each case with the direct output of the other vector identifier, in that furthermore the outputs of both summing members (S1, S2) are brought in each case by way of an adaption member (O3, O4) to a terminal summing member (S3), at the output of which a total signal, which is brought to the energising arrangement of the synchronous machine and which damps the power oscillations, can be collected, having a phase relationship which alters in an eligible frequency range with increasing oscillation frequency in a mathematically positive sense.

**Revendication**

Circuit pour l'amortissement d'oscillations de puissance dans des réseaux au moyen de signaux dérivés des variations de puissance, qui sont appliqués à l'agencement excitateur d'au moins une machine synchrone, caractérisé en ce que la puissance active réelle ($P_{ist}$) est appliquée simultanément aux entrées de deux identificateurs de vecteurs (Vi1, Vi2) optimisés pour des fréquences de découpage différentes, dont les sorties directes respectives (A11, A21) sont reliées, par l'intermédiaire d'un élément d'adaptation respectif (O11, O21), à un élément de sommation respectif (S1, S2), et dont les sorties déphasées respectives (A12, A22) sont reliées, par l'intermédiaire d'un élément d'adaptation respectif (O12, O22), à l'élément de sommation douplé respectivement à la sortie directe de l'autre identificateur de vecteur, qu'en outre les sorties des deux éléments de sommation (S1, S2) sont appliquées, par l'intermédiaire d'un élément d'adaptation respectif (O3, O4), à un élément de sommation final (S3) à la sortie duquel peut être prélevé un signal global amortissant les oscillations de puissance appliquées à l'agencement excitateur de la machine synchrone, dont la position de phase dans une gamme de fréquences sélectionnable varie dans le sens positif du point de vue mathématique lorsque la fréquence de découpage augmente.